Europäisches Patentamt

European Patent Office

Office européen des brevets

(19)

(11) EP 0 961 467 A1

(12) EUROPEAN PATENT APPLICATION

(43) Date of publication:
01.12.1999 Bulletin 1999/48

(51) Int. Cl.⁶: H04M 3/30

(21) Application number: 98304171.6

(22) Date of filing: 27.05.1998

(84) Designated Contracting States:
AT BE CH CY DE DK ES FI FR GB GR IE IT LI LU
MC NL PT SE
Designated Extension States:
AL LT LV MK RO SI

(71) Applicant:
PORTA SYSTEMS CORPORATION
Syosset, NY 11791 (US)

(72) Inventors:
• De Tullio, Robert
  CV34 5HY (GB)

• Fidler, John Kelvin
  York Y01 5DB (GB)
• Yu, Jiliang
  York Y10 4HY (GB)
• Greening, Mark
  Kenilworth CV8 1BT (GB)

(74) Representative:
Skone James, Robert Edmund
GILL JENNINGS & EVERY
Broadgate House
7 Eldon Street
London EC2M 7LH (GB)

(54) **Apparatus and method for testing a telecommunications system**

(57)     A method of testing a telecommunications system (7), the method comprising;

1) applying a first AC test signal having a first signal frequency to the system and measuring the response of the system to the first test signal;
2) applying a second AC test signal having a second signal frequency different to the first signal frequency to the system and measuring the response of the system to the second test signal; and

3) calculating one or more parameters of the system from the responses measured in steps 1) and 2).

Fig. 1

**Description**

The present invention relates to a method and apparatus for testing a telecommunications system.

Conventional apparatus for testing telecommunications systems applies a test signal to the telecommunications system and, by analysing the response of the system to the test signal, calculates one or more parameters of the system in accordance with a chosen line model.

A problem with conventional methods is that it is not possible to determine the series line resistance of a transmission line in the system under test.

In accordance with a first aspect of the present invention there is provided a method of testing a telecommunications system, the method comprising;

1) applying a first AC test signal having a first signal frequency to the system and measuring the response of the system to the first test signal;

2) applying a second AC test signal having a second signal frequency different to the first signal frequency to the system and measuring the response of the system to the second test signal; and

3) calculating one or more parameters of the system from the responses measured in steps 1) and 2).

The first aspect of the present invention provides additional data which can be analyzed to calculate system parameters (e.g. electrical parameters such as resistance or capacitance) which have been previously difficult or impossible to determine - such as series line resistance.

The first and second AC test signals may be applied at the same time, in the form of a multi-frequency signal. However preferably the first and second test signals are applied at different times.

The wave form of the first and/or second test signal may be non-sinusoidal (for instance a square wave or saw-tooth wave) but preferably the test signals have a substantially sinusoidal waveform. This simplifies the calculation procedure.

It is important that the method can test the telecommunications system quickly - this enables a number of lines within the system to be tested over a given period. Therefore preferably less than 5 cycles of each signal is applied to the system. In a preferred embodiment, two cycles of each signal are applied to the system.

Typically the test signals are each applied to the system through a known impedance. The voltage drop across the known impedance can then be used to calculate a characteristic impedance of the telecommunications system.

If additional data is required, then one or more additional test signals may be applied to the system. The one or more additional test signals may comprise AC test signals with a signal frequency different to the signal frequency of the first and second test signals. However preferably the or each additional test signal comprises a DC test signal.

Typically the system comprises first and second transmission lines (conventionally known as A and B lines). Conventionally an AC test signal is applied simultaneously to both lines (either in phase or in anti-phase) and the response of only one of the lines is monitored. In a preferred embodiment the step of applying a test signal and measuring the response of the system comprises:

a) applying the test signal to the first line and monitoring the response of the first line and the second line to the test signal; and

b) applying the test signal to the second line and monitoring the response of the second line and the first line to the second test signal.

By monitoring the response of both lines, additional parameters can be obtained.

In accordance with a second aspect of the present invention there is provided a method of testing a telecommunications system comprising first and second transmission lines, the method comprising

1) applying a first test signal to the first line and monitoring the response of the first line and the second line to the first test signal;

2) applying a second test signal to the second line and monitoring the response of the second line and the first line to the second test signal; and

3) calculating one or more parameters of the telecommunications system from the responses measured in steps 1) and 2).

The second aspect of the present invention enables a number of system parameters to be calculated. In contrast with conventional systems, the response of both the first line and the second line is monitored.

The first and second signals may be DC signals, or alternatively the first test signal and/or the second test signal may comprise an AC signal. In a preferred example the signal frequencies of the first and second test signals are

2

substantially identical. Alternatively, the signal frequency of the first and second test signals may be different.

The first and second test signals may be generated independently, but preferably they have a known phase relationship. This enables the parameters to be calculated more easily in step 3).

A number of embodiments of the present invention will now be described with reference to the accompanying drawings in which:-

Figure 1 is a schematic illustration of apparatus for testing a telecommunications system;
Figure 2 illustrates the remote test unit, exchange and telephone in more detail;
Figure 3 illustrates the functional structure of the remote test unit;
Figure 4 is a schematic diagram illustrating the arrangement of the line test unit;
Figure 5 illustrates part of the measurement cycle;
Figure 6 illustrates the full complex voltages measured by the AC measurement cycle;
Figure 7 is a first example of a line model;
Figure 8 is an enhanced line model;
Figure 9 is a line termination model, discussed in Appendix 4; and
Figure 10 is a third example of a line model.

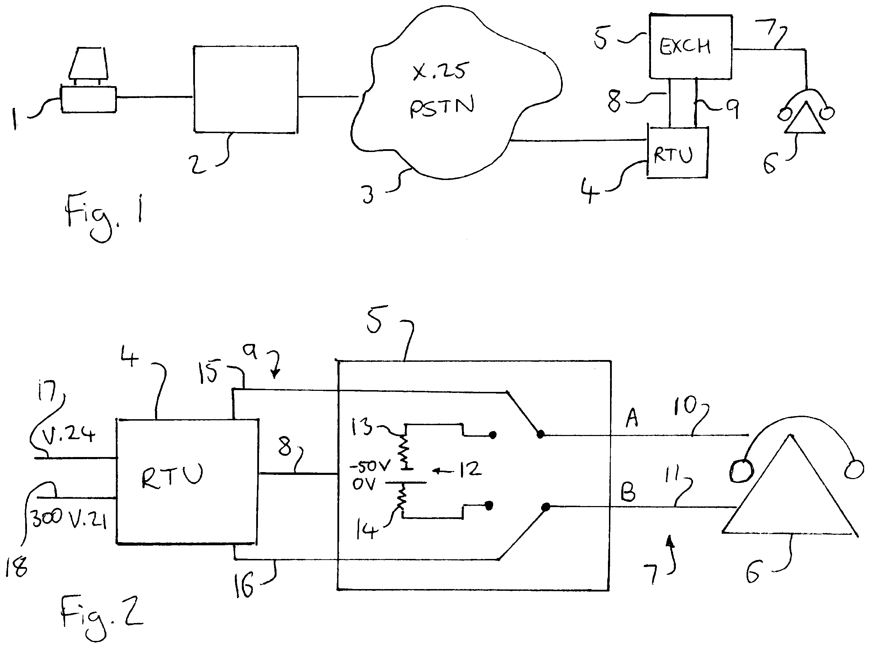

Figure 1 is a schematic diagram of a system for remotely testing a telecommunications line. An operator station 1 is connected to a general controller 2 which inputs and outputs signals to/from a telecommunications medium 3 (which may comprise a PSTN or X.25 network). A telephone 6 is connected to a local exchange 5 via a land line 7. A remote test unit (RTU) 4 is connected to the exchange 5 in order to test the land line 7. Figure 1 illustrates a control path 8 and a test path 9.

As can be seen in Figure 2, the line 7 comprises a pair of lines 10,11 (configured as a twisted pair) known conventionally as "A" and "B" lines. An exchange feed comprising a 50V battery 12 is connected to the A and B lines 10,11 during normal operation via 200 ohm resistors 13,14. In order to test the line 7, the RTU control line 8 switches the A and B lines 10,11 over to the test line 9 (which in turn comprises a pair of input lines 15,16). The RTU communicates with the general controller 2 via a V.24 link (17) or 300 V.21 link (18).

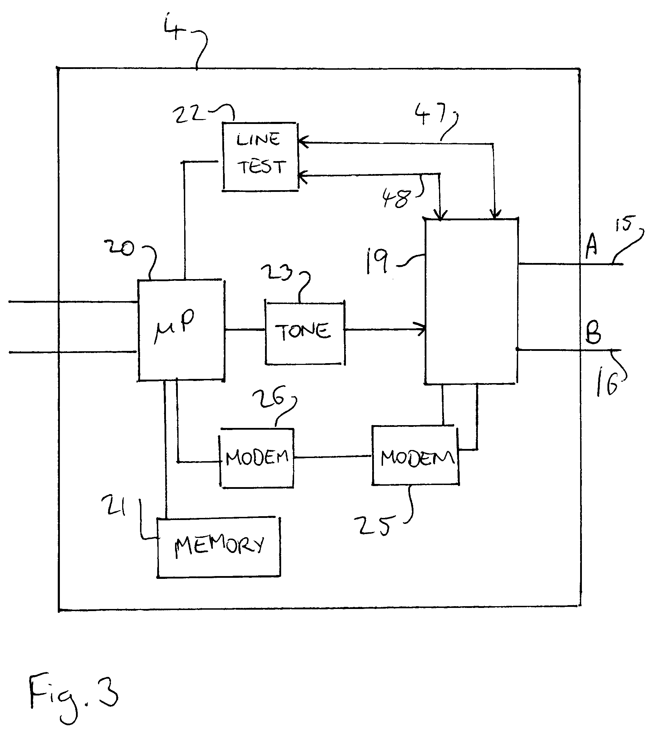

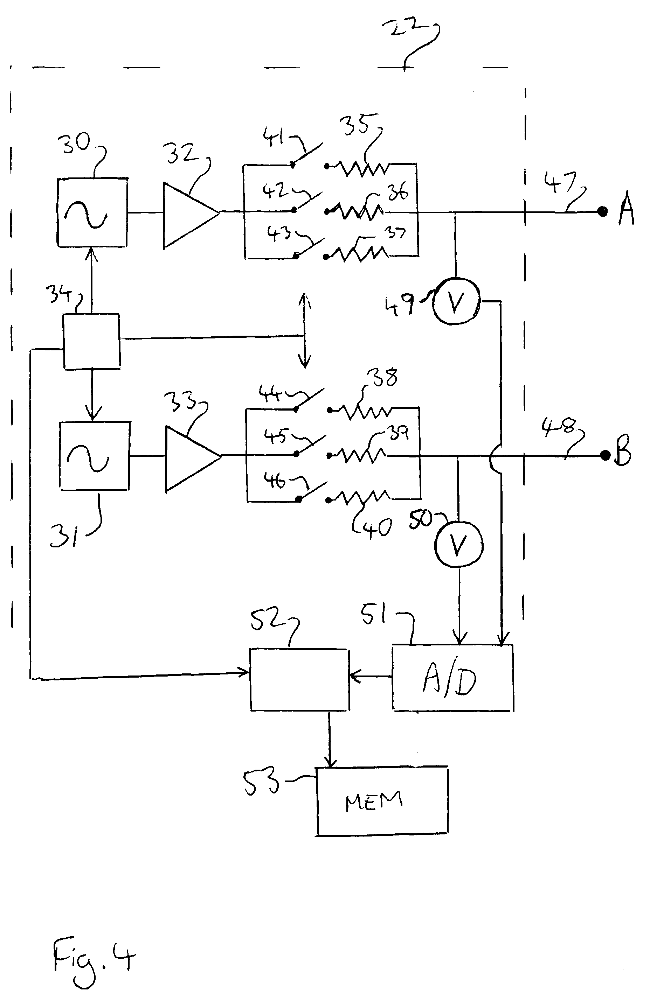

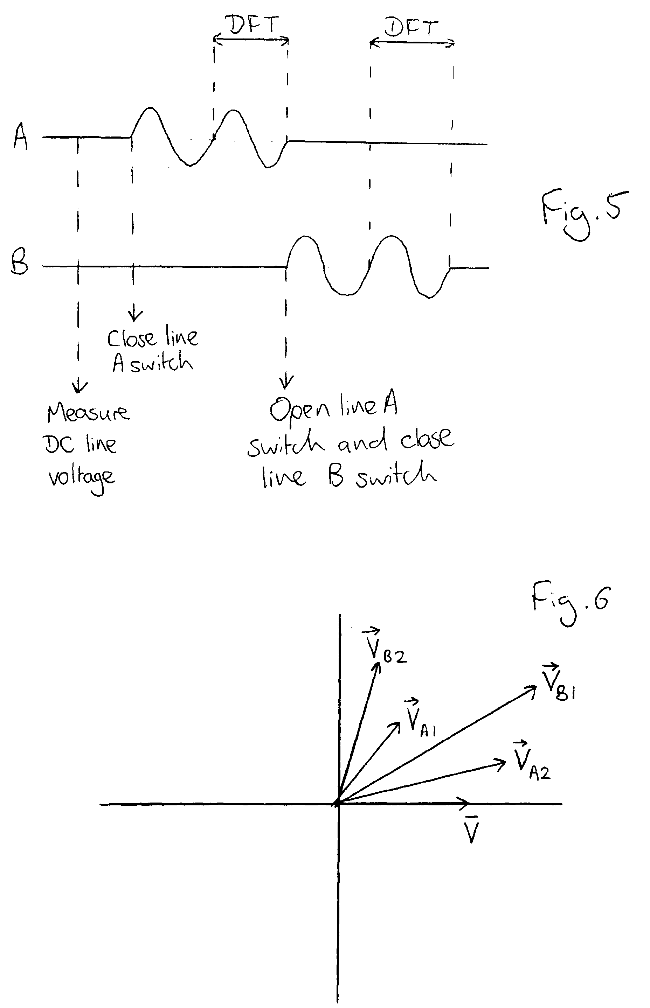

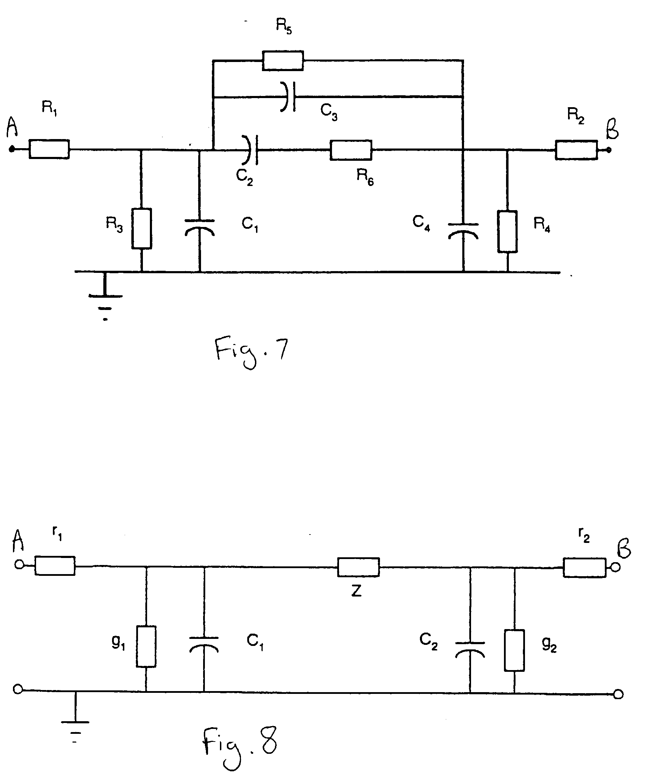

The internal functional structure of the RTU 4 is shown in Figure 3. The A and B input lines 15,16 are connected to a line access unit 19 which controls the input and output of signals to/from the line 7. A line test unit 22 controls testing of the line 7, a tone generator 23 generates tone signals 24 which can be output onto the line 7, and voice modems 25,26 handle voice signals which can be communicated between the operator station 1 and telephone set 6. The RTU is controlled by a microprocessor 20 and data acquired is saved in a memory 21.

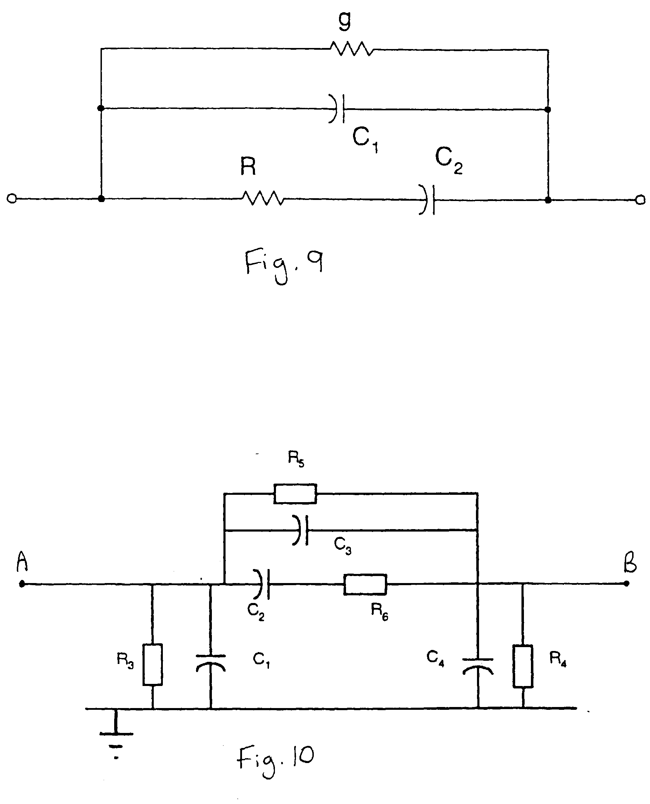

The line test unit 22 is illustrated in more detail in Figure 4. A pair of signal generators 30,31 generate sine wave signals which are amplified by respective amplifiers 32,33. The signals output by amplifiers 32,33 have a range of +/-200V and a bandwidth of 10kHz. The signal generators 30,31 are run synchronously from the same clock by a controller 34. This ensures that the signals have a known phase relationship. Each line has a respective set of output resistors 35-40 (each having a known resistance within a tolerance of 1%). Each output resistor has an associated switch 41-46 which can be closed by controller 34 to connect the associated output resistor between the amplifier and output line 47,48. Typical resistance values for the three output resistors on each line are 200,1M and 100K ohms. The voltage on line A is measured by a voltmeter 49 and the voltage on line B is measured by a voltmeter 50. The voltages are digitised by A-D converter 51 which samples at 12 kHz. Phase and RMS voltage values are calculated by processor 52 and stored in memory 53.

Referring to Figure 5, the line test procedure is as follows:

Step 1 - open all output resistor switches 41-46 and measure DC voltage on A and B lines.
Step 2 - adjust DC bias of amplifier 32 so that amplified signal is centred on line A DC voltage level.
Step 3 - adjust DC bias of amplifier 33 so that amplified signal is centred on line B DC voltage level.
Step 4 - set signal generators 30,31 to generate a DC signal.
Step 5 - close a selected one of the line A output resistor switches 41-43.
Step 6 - store DC voltages on voltmeters 39,50 in memory 53.
Step 7 - open selected line A switch and close a selected one of the line B output resistor switches 44-46.
Step 8 - store DC voltages on voltmeters 39,50 in memory 53.
Step 9 - set signal generators 30,31 to 2.75Hz.
Step 10 - after first cycle, perform digital fourier transform (at 2.75Hz) of signals from voltmeters 49,50 over second cycle and store amplitude and phase values in memory 53.
Step 11 - open selected switch 44-46 (line B) and close switch 41-43 associated with selected output resistor (line A).
Step 12 - after first cycle, perform digital fourier transform (at 2.75Hz) of signals from voltmeters 49,50 over second cycle and store amplitude and phase values in memory 53.

Step 13 - adjust frequency of signal generators 30,31 to 5Hz.

Steps 14-16 - repeat steps 10-12 at 5Hz.

The resulting AC data can be represented as four complex voltage values as illustrated in Figure 6, where:

$V_{A1}$ is the voltage measured by voltmeter 49 (line A) with signal being applied to line A;

$V_{B1}$ is the voltage measured by voltmeter 50 (line B) with signal being applied to line A;

$V_{A2}$ is the voltage measured by voltmeter 49 (line A) with signal being applied to line B; and

$V_{B2}$ is the voltage measured by voltmeter 50 (line B) with signal being applied to line B.

The four complex values can then be used to calculate four impedance parameters Z as defined below:

$$Z_{11} = V_{ae}/I_a \text{ when line b is open;}$$

$$Z_{22} = V_{be}/I_b \text{ when line a is open;}$$

$$Z_{12} = V_{ae}/I_b \text{ when line a is open; and}$$

$$Z_{21} = V_{be}/I_a \text{ when line b is open;.}$$

where

$V_{ae}$ is the voltage on voltmeter 49 (ie. the voltage from line A to earth);

$V_{be}$ is the voltage on voltmeter 50 (ie. the voltage from line B to earth);

$I_a$ is the current on line 47 (line A) ; and

$I_b$ is the current on line 48 (line B).

Since the voltages $(V_a, V_b)$ output by the amplifiers 32,33 and the values $(R_a, R_b)$ of the resistors 35-40 are known accurately, the currents $I_a$ and $I_b$ can be eliminated from the expressions for Z as follows:

$$Z_{11} = R_a V_{ae}/(V - V_{ae});$$

$$Z_{22} = R_b V_{be}/(V - V_{be}) ;$$

$$Z_{12} = R_b V_{ae}/(V - V_{be}); \text{ and}$$

$$Z_{21} = R_a V_{be}/(V - V_{ae}).$$

Once the Z parameters have been calculated as discussed above, they can be used to determine characteristics of the line 7 under test using an algorithm based on a selected line model.

One example of a suitable line model is illustrated in Figure 7. The series resistances of the lines 10,11 between the RTU 4 and the telephone 6 are represented by resistors $R_1, R_2$. The line termination at telephone 6 is represented by resistors $R_5, R_6$ and capacitors $C_2, C_3$. The leakage to ground from the A and B lines is represented by resistors $R_3, R_4$ and capacitors $C_1, C_2$. The problem with the line model of Figure 7 is that it is difficult to find ten independent equations based on conventional tests in order to calculate the ten line model parameters. Even if ten independent equations could be found, it would be difficult to solve the ten non-linear equations even by a numerical method.

The alternative line model of Figure 8 reduces the number of parameters to be identified by replacing the line termination parameters $R_5, R_6, C_2$ and $C_3$ with a single impedance value Z. In Figure 8 the series resistances of the lines 10,11 between the RTU 4 and the telephone 6 are represented by resistors $r_1, r_2$ and the leakage to ground from the A and B lines is represented by resistors $g_1, g_2$ and capacitors $C_1, C_2$.

A set of equations based on the enhanced line model of Figure 8 can be manipulated into a linear equation system and a set of symbolic solutions obtained as set out in Appendix 1, Appendix 2 and Appendix 3 below.

Furthermore, the line termination parameters can also be calculated as set out in Appendix 4 below.

The calculated values of the parameters $r_1$, $r_2$, $g_1$, $g_2$, $c_1$, $c_2$ and z are stored at the RTU for later analysis or transmitted back to the operator station 1. The parameters can then be used to identity and characterise any faults on the line 7 such as a break in the line, fault to ground or fault to another line. Furthermore the parameters can be used to determine whether the line 7 is suitable for carrying different communication protocols such as ISDN,DACS,HDSL,CWSS or ADSL.

A further alternative line model is illustrated in Figure 10. It is possible to calculate the parameters of this model using a simplified measurement procedure which uses a DC measurement followed by a single AC measurement (ie. at only one frequency).

Although the line test unit 22 illustrated in Figure 4 is shown with two signal generators 30,31 and two sets of output resistors 41-46, it will be appreciated that a single generator and a single set of resistors could be used, and switched from one line to the other.

# Appendix 1

## Identification Results

The model parameters including the series resistances are given as follows,

$$r_1 = \frac{n_1 Z_{11b} + Z_{11a}\omega n_2 + \omega n_3 Z_{12a} + Z_{12b}}{\omega n_2} \tag{1}$$

$$r_2 = \frac{n_1 Z_{11b} + Z_{22a}\omega n_3 + \omega n_2 Z_{12a} + Z_{22b}}{\omega n_2} \tag{2}$$

$$g_2 = -\frac{\omega n_2}{(n_1)^2 Z_{11b} + n_1 n_3 Z_{12a}\omega + n_1 Z_{12b} - n_2 Z_{12a}\omega + n_2 n_3 Z_{12b}(\omega)^2 + (n_2)^2 Z_{11b}(\omega)^3} \tag{3}$$

$$g_1 = n_1 g_2$$
$$c_1 = n_2 g_2 \tag{4}$$
$$c_2 = n_3 g_2 \tag{5}$$

$$Z = \frac{\dfrac{1}{Z_{12}} - g_1 - g_2 - j\omega c_1 - j\omega c_2}{(g_1 + j\omega c_1)(g_2 + j\omega c_2)} \tag{6}$$

where $\omega$ is test frequency, $Z_{ija}$ and $Z_{ijb}$, $i=1,2$, $j=1,2$ are the real and imaginary parts of the Z-parameters respectively, and $n_k$, $k=1,2,3$ can be calculated from the knowns, whose expressions along with the detailed mathematical manipulations were given in the appendix.

## An example

For a simple example to show that the proposed method can solve the problem, let us suppose that

$$r_1 = r_2 = 1,$$
$$g_1 = 2,$$
$$g_2 = 3,$$
$$c_1 = 2,$$
$$c_2 = 4,$$
$$Z = \frac{1 - j\omega}{4}$$

For this simple example, the measurements of Z-parameters can be easily simulated by simple calculation as indicated in (7)-(9) in the appendix. They are,

$$\omega = 1,$$

$$Z_{11a} = \frac{377}{328}$$

$$Z_{11b} = \frac{-51}{328}$$

$$Z_{12a} = \frac{2}{41}$$

$$Z_{12b} = \frac{-5}{82}$$

$$Z_{22a} = \frac{45}{41}$$

$$Z_{22b} = \frac{-5}{41}$$

$$\omega_2 = 2$$

$$Z_{11a}^2 = \frac{10145}{9442}$$

$$Z_{11b}^2 = \frac{-711}{4721}$$

$$Z_{12a}^2 = \frac{50}{4721}$$

$$Z_{12b}^2 = \frac{-128}{4721}$$

$$Z_{22a}^2 = \frac{4896}{4721}$$

$$Z_{22b}^2 = \frac{-488}{4721}$$

substitue them to (27) to (35) to calculate coefficients (See appendix 2 for definition) we get

$$a_1 = \frac{116037}{1548488}$$

$$a_2 = \frac{7392}{193561}$$

$$a_3 = \frac{11709}{193561}$$

$$d_1 = \frac{225645}{1548488}$$

$$d_2 = \frac{-124167}{774244}$$

$$d_3 = \frac{-2613}{387122}$$

$$d_5 = \frac{13131}{193561}$$

$$d_6 = \frac{-28842}{193561}$$

By further substituting to (46) to (48) we get

$$n_1 = \frac{2}{3}$$

$$n_2 = \frac{2}{3}$$

$$n_3 = \frac{4}{3}$$

So we can calculate $r_1$ and $r_2$ from (50) and (51), the results are

$$r_1 = 1$$

$$r_2 = 1$$

and g2 from (52)

$g_2=3$

from (43) to (45)

$g_1=2$

$c_1=2$

$c_2=4$

which are exactly the same as our assumption. For a more practical example, the results' accuracy relies heavily on the precision of the software. It needs to be studied that what precision is needed for our test purpose.

# Discussion and conclusions

- In the report, we suppose that two frequencies are used in the measurements. It is noticed that one of them can be zero, that means we can use a DC test and an AC test to identify all the parameters. But in this case, the formulas are more complicated as less information obtained. In fact, a second order, two variables non-linear equation system has to be solved, maybe numerically. Further study is carrying out along this direction hoping find a way to find a relatively simple symbolic solution.

- The calculation can be further reduced as we use two frequencies with one doubles the other, which is the case in the current test system.

- It is possible to locate leakage fault by using the series resistance.

- The line termination parameters, which are represented by a combined impedance Z in our discussion, can be further identified

- It can be concluded that all the parameters in the enhanced line model can be uniquely identified with two frequencies measurements. For the DC and AC case, the line parameter and the combined line termination can be identified, but the individual line termination parameters remain unsolved

# Appendix 2

For a two port network as shown in Figure 8, the Z-parameters can be calculated as follows,

$$Z_{11} = r_1 + \frac{\dfrac{1}{g_1 + j\omega c_1}\left(Z + \dfrac{1}{g_2 + j\omega c_2}\right)}{\dfrac{1}{g_1 + j\omega c_1} + Z + \dfrac{1}{g_2 + j\omega c_2}}$$

$$= r_1 + \frac{(g_2 + j\omega c_2)Z + 1}{g_1 + g_2 + j\omega c_1 + j\omega c_2 + Z(g_1 + j\omega c_1)(g_2 + j\omega c_2)} \tag{7}$$

$$= r_1 + \frac{(g_2 + j\omega c_2)Z + 1}{\Delta}$$

$$Z_{12} = \frac{\dfrac{1}{g_1 + j\omega c_1}\dfrac{1}{g_2 + j\omega c_2}}{\dfrac{1}{g_1 + j\omega c_1} + Z + \dfrac{1}{g_2 + j\omega c_2}}$$

$$= \frac{1}{(g_1 + j\omega c)(g_2 + j\omega c_2)\left(\dfrac{1}{g_1 + j\omega c_1} + Z + \dfrac{1}{g_2 + j\omega c_2}\right)} \tag{8}$$

$$= \frac{1}{g_1 + g_2 + j\omega c_1 + j\omega c_2 + Z(g_1 + j\omega c_1)(g_2 + j\omega c_2)}$$

$$= \frac{1}{\Delta}$$

$$Z_{22} = r_2 + \frac{\dfrac{1}{g_2 + j\omega c_2}\left(Z + \dfrac{1}{g_1 + j\omega c_1}\right)}{\dfrac{1}{g_1 + j\omega c_1} + Z + \dfrac{1}{g_2 + j\omega c_2}}$$

$$= r_2 + \frac{(g_1 + j\omega c_1)Z + 1}{g_1 + g_2 + j\omega c_1 + j\omega c_2 + Z(g_1 + j\omega c_1)(g_2 + j\omega c_2)} \tag{9}$$

$$= r_2 + \frac{(g_1 + j\omega c_1)Z + 1}{\Delta}$$

From (8) we can get,

$$Z(g_1 + j\omega c_1)(g_2 + j\omega c_2) = \frac{1}{Z_{12}} - g_1 - g_2 - j\omega c_1 - j\omega c_2 \tag{10}$$

Rewritten (7) as:

$$Z_{11} = r_1 + [(g_2 + j\omega c_2)Z + 1]Z_{12}$$

multiply $(g_1 + j\omega c_1)$, if $(g_1 + j\omega c_1) \neq 0$, we get

$$(g_1 + j\omega c_1)Z_{11} = r_1(g_1 + j\omega c_1) + (g_1 + j\omega c_1)[(g_2 + j\omega c_2)Z + 1]Z_{12}$$

$$= r_1(g_1 + j\omega c_1) + [(g_1 + j\omega c_1)(g_2 + j\omega c_2)Z]Z_{12} + (g_1 + j\omega c_1)Z_{12} \tag{11}$$

substitute (10) to (11) to eliminate Z,

$$(g_1 + j\omega c_1)Z_{11} = r_1(g_1 + j\omega c_1) + (\frac{1}{Z_{12}} - g_1 - g_2 - j\omega c_1 - j\omega c_2)Z_{12} + (g_1 + j\omega c_1)Z_{12}$$

$$= r_1(g_1 + j\omega c_1) + 1 - (g_1 + j\omega c_1)Z_{12} - (g_2 + j\omega c_2)Z_{12} + (g_1 + j\omega c_1)Z_{12} \quad (12)$$

$$= r_1(g_1 + j\omega c_1) + 1 - (g_2 + j\omega c_2)Z_{12}$$

Similarly we can get an equation about $Z_{22}$ as

$$(g_2 + j\omega c_2)Z_{22} = r_2(g_2 + j\omega c_2) + 1 - (g_1 + j\omega c_1)Z_{12} \quad (13)$$

We write the Z-parameters in their real and imaginary part as

$$Z_{11} = Z_{11a} + jZ_{11b}$$

$$Z_{12} = Z_{12a} + jZ_{12b} \quad (14)$$

$$Z_{22} = Z_{22a} + jZ_{22b}$$

Substitute (14) to (12) we get

$$(g_1 + j\omega c_1)(Z_{11a} + jZ_{11b}) = r_1(g_1 + j\omega c_1) + 1 - (g_2 + j\omega c_2)(Z_{12a} + jZ_{12b})$$

$$g_1 Z_{11a} - \omega c_1 Z_{11b} + j(g_1 Z_{11b} + Z_{11a}\omega c_1) = r_1 g_1 + 1 - g_2 Z_{12a} + \omega c_2 Z_{12b} + j(r_1\omega c_1 - \omega c_2 Z_{12a} - g_2 Z_{12b}) \quad (15)$$

By separate real and imaginary part, we get two equations,

$$g_1 Z_{11a} - \omega c_1 Z_{11b} - r_1 g_1 - 1 + g_2 Z_{12a} - \omega c_2 Z_{12b} = 0 \quad (16)$$

$$g_1 Z_{11b} + Z_{11a}\omega c_1 - r_1\omega c_1 + \omega c_2 Z_{12a} + g_2 Z_{12b} = 0 \quad (17)$$

Be substituting (14) to (13) we can get another two equations in a similar way,

$$g_2 Z_{22a} - \omega c_2 Z_{22b} - r_2 g_2 - 1 + g_1 Z_{12a} - \omega c_1 Z_{12b} = 0 \quad (18)$$

$$g_2 Z_{22b} + Z_{22a}\omega c_2 - r_2\omega c_2 + \omega c_1 Z_{12a} + g_1 Z_{12b} = 0 \quad (19)$$

When the measurements are taken at two frequencies, we can get another set of equation at frequency $\omega_2$, if we denote the measurements at this frequency by adding a superscript 2 to the corresponding quantities, the equations can be written as follows

$$g_1 Z_{11a}^2 - \omega_2 c_1 Z_{11b}^2 - r_1 g_1 - 1 + g_2 Z_{12a}^2 - \omega_2 c_2 Z_{12b}^2 = 0 \quad (20)$$

$$g_1 Z_{11b}^2 + Z_{11a}^2\omega_2 c_1 - r_1\omega_2 c_1 + \omega_2 c_2 Z_{12a}^2 + g_2 Z_{12b}^2 = 0 \quad (21)$$

$$g_2 Z_{22a}^2 - \omega_2 c_2 Z_{22b}^2 - r_2 g_2 - 1 + g_1 Z_{12a}^2 - \omega_2 c_1 Z_{12b}^2 = 0 \quad (22)$$

$$g_2 Z_{22b}^2 + Z_{22a}^2\omega_2 c_2 - r_2\omega_2 c_2 + \omega_2 c_1 Z_{12a}^2 + g_1 Z_{12b}^2 = 0 \quad (23)$$

The problem is to solve equations (16) to (23) for model parameters $r_k$, $g_k$ and $c_k$, $k=1,2$.

To eliminate $r_1$ and $r_2$, first let (16) − (20), we get,

$$g_1(Z_{11a} - Z_{11a}^2) - c_1(\omega Z_{11b} - \omega_2 Z_{11b}^2) + g_2(Z_{12a} - Z_{12a}^2) - c_2(\omega Z_{12b} - \omega_2 Z_{12b}^2) = 0 \quad (24)$$

then $\omega_2 \times (17) - \omega \times (21)$ which gives,

$$g_1(\omega_2 Z_{11b} - \omega Z_{11b}^2) - \omega\omega_2 c_1(Z_{11a} - Z_{11a}^2) + g_2(\omega_2 Z_{12b} - \omega Z_{12b}^2) - \omega\omega_2 c_2(Z_{12a} - Z_{12a}^2) = 0 \quad (25)$$

similarly. (12) − (16) yields,

$$g_2(Z_{22a} - Z_{22a}^2) - c_2(\omega Z_{22b} - \omega_2 Z_{22b}^2) + g_1(Z_{12a} - Z_{12a}^2) - c_1(\omega Z_{12b} - \omega_2 Z_{12b}^2) = 0 \quad (26)$$

Let,

$$a_1 = Z_{11a} - Z_{11a}^2 \quad (27)$$

$$a_2 = Z_{12a} - Z_{12a}^2 \quad (28)$$

$$a_3 = Z_{22a} - Z_{22a}^2 \quad (29)$$

and

$$b_1 = \omega Z_{11b} - \omega_2 Z_{11b}^2 \quad (30)$$

$$b_2 = \omega_2 Z_{11b} - \omega Z_{11b}^2 \quad (31)$$

$$b_3 = \omega Z_{12b} - \omega_2 Z_{12b}^2 \quad (32)$$

$$b_4 = \omega_2 Z_{12b} - \omega Z_{12b}^2 \tag{33}$$

$$b_5 = \omega Z_{22b} - \omega_2 Z_{22b}^2 \tag{34}$$

$$b_6 = \omega_2 Z_{22b} - \omega Z_{22b}^2 \tag{35}$$

So (24) to (26) can be rewritten as

$$a_1 g_1 - b_1 c_1 + a_2 g_2 - b_3 c_2 = 0 \tag{36}$$

$$b_2 g_1 + a_1 \omega \omega_2 c_1 + b_4 g_2 + a_2 \omega \omega_2 c_2 = 0 \tag{37}$$

$$a_3 g_2 - b_5 c_2 + a_2 g_1 - b_3 c_1 = 0 \tag{38}$$

Solve (36) to (38) for $g_1$, $c_1$, and $c_2$ we get,

$$g_1 = -\frac{a_1 a_2 b_5 \omega \omega_2 + b_1 b_4 b_5 - (b_3)^2 b_4 + a_2 a_3 b_1 \omega \omega_2 - a_1 a_3 b_3 \omega \omega_2 - (a_2)^2 b_3 \omega \omega_2}{\Delta_1} g_2 \tag{39}$$

$$c_1 = -\frac{a_1 b_4 b_5 + a_1 a_2 a_3 \omega \omega_2 - a_2 b_2 b_5 - (a_2)^3 \omega \omega_2 - a_2 b_3 b_4 + a_2 b_2 b_3}{\Delta_1} g_2 \tag{40}$$

$$c_2 = \frac{-a_2 b_1 b_4 + a_3 b_1 b_2 - a_1 (a_2)^2 \omega \omega_2 - a_2 b_2 b_3 + (a_1)^2 a_3 \omega \omega_2 + a_1 b_3 b_4}{\Delta_1} g_2 \tag{41}$$

where

$$\Delta_1 = b_1 b_2 b_5 + (a_1)^2 b_5 \omega \omega_2 - b_2 (b_3)^2 + (a_2)^2 b_1 \omega \omega_2 - 2 a_1 a_2 b_3 \omega \omega_2 \tag{42}$$

If we denote the coefficient of (39)-(41) by $n_j$, $j=1, 2, 3$, we get,

$$g_1 = n_1 g_2 \tag{43}$$

$$c_1 = n_2 g_2 \tag{44}$$

$$c_2 = n_3 g_2 \tag{45}$$

where

$$n_1 = -\frac{a_1 a_2 b_5 \omega \omega_2 + b_1 b_4 b_5 - (b_3)^2 b_4 + a_2 a_3 b_1 \omega \omega_2 - a_1 a_3 b_3 \omega \omega_2 - (a_2)^2 b_3 \omega \omega_2}{\Delta_1} \tag{46}$$

$$n_2 = -\frac{a_1 b_4 b_5 + a_1 a_2 a_3 \omega \omega_2 - a_2 b_2 b_5 - (a_2)^3 \omega \omega_2 - a_2 b_3 b_4 + a_2 b_2 b_3}{\Delta_1} \tag{47}$$

$$n_3 = \frac{-a_2 b_1 b_4 + a_3 b_1 b_2 - a_1 (a_2)^2 \omega \omega_2 - a_2 b_2 b_3 + (a_1)^2 a_3 \omega \omega_2 + a_1 b_3 b_4}{\Delta_1} \tag{48}$$

Substitute $g_1, c_1, c_2$ to (17)

$$n_1 g_2 Z_{11b} + Z_{11a} \omega n_2 g_2 - r_1 \omega n_2 g_2 + \omega n_3 g_2 Z_{12a} + g_2 Z_{12b} = 0 \tag{49}$$

if $g_2 \neq 0$, we can solve (49) for $r_1$ as follows

$$r_1 = \frac{n_1 Z_{11b} + Z_{11a} \omega n_2 + \omega n_3 Z_{12a} + Z_{12b}}{\omega n_2} \tag{50}$$

Similarly we can get $r_2$ from (19)

$$r_2 = \frac{n_1 Z_{11b} + Z_{22a} \omega n_3 + \omega n_2 Z_{12a} + Z_{22b}}{\omega n_2} \tag{51}$$

Substitute $g_1, c_1, c_2$ and $r_1$ to (16), we can determine g2,

$$g_2 = -\frac{\omega n_2}{(n_1)^2 Z_{11b} + n_1 n_3 Z_{12a} \omega + n_1 Z_{12b} - n_2 Z_{12a} \omega + n_2 n_3 Z_{12b} (\omega)^2 + (n_2)^2 Z_{11b} (\omega)^3} \tag{52}$$

After $g_2$ is determined, $g_1, c_1, c_2$ can be calculated from (43) to (45). So far, the only parameter left undetermined is Z, which can be calculated at frequency $\omega$ from (10) as

$$Z = \frac{\dfrac{1}{Z_{12}} - g_1 - g_2 - j\omega c_1 - j\omega c_2}{(g_1 + j\omega c_1)(g_2 + j\omega c_2)} \qquad (53)$$

Appendix 3
_____

# Further discussions on Identification Results

In Appendix 2 we got a set of symbolic solutions to all the parameters in the enhanced model. The results are repeated here,

$$r_1 = \frac{n_1 Z_{11b} + Z_{11a}\omega n_2 + \omega n_3 Z_{12a} + Z_{12b}}{\omega n_2} \tag{1}$$

$$r_2 = \frac{n_1 Z_{11b} + Z_{22a}\omega n_3 + \omega n_2 Z_{12a} + Z_{22b}}{\omega n_2} \tag{2}$$

$$g_2 = -\frac{\omega n_2}{(n_1)^2 Z_{11b} + n_1 n_3 Z_{12a}\omega + n_1 Z_{12b} - n_2 Z_{12a}\omega + n_2 n_3 Z_{12b}(\omega)^2 + (n_2)^2 Z_{11b}(\omega)^3} \tag{3}$$

$$g_1 = n_1 g_2$$

$$c_1 = n_2 g_2 \tag{4}$$

$$c_2 = n_3 g_2 \tag{5}$$

$$Z = \frac{\dfrac{1}{Z_{12}} - g_1 - g_2 - j\omega c_1 - j\omega c_2}{(g_1 + j\omega c_1)(g_2 + j\omega c_2)} \tag{6}$$

where $\omega$ is test frequency, $Z_{ija}$ and $Z_{ijb}$, $i=1,2$, $j=1,2$ are the real and imaginary parts of the Z-parameters respectively, and $n_k$, $k=1,2,3$ can be calculated as follows,

$$n_1 = -\frac{a_1 a_2 b_5 \omega\omega_2 + b_1 b_4 b_5 - (b_3)^2 b_4 + a_2 a_3 b_1 \omega\omega_2 - a_1 a_3 b_3 \omega\omega_2 - (a_2)^2 b_3 \omega\omega_2}{\Delta_1} \tag{7}$$

$$n_2 = -\frac{a_1 b_4 b_5 + a_1 a_2 a_3 \omega\omega_2 - a_2 b_2 b_5 - (a_2)^3 \omega\omega_2 - a_2 b_3 b_4 + a_2 b_2 b_3}{\Delta_1} \tag{8}$$

$$n_3 = \frac{-a_2 b_1 b_4 + a_3 b_1 b_2 - a_1 (a_2)^2 \omega\omega_2 - a_2 b_2 b_3 + (a_1)^2 a_3 \omega\omega_2 + a_1 b_3 b_4}{\Delta_1} \tag{9}$$

where

$$\Delta_1 = b_1 b_2 b_5 + (a_1)^2 b_5 \omega\omega_2 - b_2 (b_3)^2 + (a_2)^2 b_1 \omega\omega_2 - 2a_1 a_2 b_3 \omega\omega_2 \tag{10}$$

and $a_k$, $k=1,2,3$, $b_j$, $j=1...6$ can be calculated directly from the knowns( See [1] for their definations)

One problem with this set of formula is that $\Delta_1$ can be zero for some particular measurement values. In this case, an alternative has to be found to calculate the parameters. Taking into

consideration the condition that $\Delta_1$ is zero, another set of formula can be obtained as shown in the follows.

$$r_1 = -\frac{-Z_{11a}\omega a_2 b_5 + Z_{11a}\omega a_3 b_3 - Z_{12b}b_1 b_5 + Z_{12b}(b_3)^2 - Z_{12a}\omega a_3 b_1 + Z_{12a}\omega a_2 b_3}{\omega(a_2 b_5 - a_3 b_3)} \tag{11}$$

$$r_2 = \frac{Z_{22a}\omega a_1 b_3 - Z_{22a}\omega a_2 b_1 - Z_{12b}b_1 b_5 + Z_{12b}(b_3)^2 - Z_{12a}\omega a_1 b_5 + Z_{12a}\omega a_2 b_3}{\omega(a_1 b_3 - a_2 b_1)} \tag{11}$$

$$g_2 = \frac{s_2 - m_2}{m_1 s_2 - m_2 s_1} \tag{13}$$

$$c_2 = \frac{m_1 - s_1}{m_1 s_2 - m_2 s_1} \tag{14}$$

$$c_1 = q_1 c_2 + q_2 g_2 \tag{15}$$

$$c_1 = p_1 c_2 + p_2 g_2 \tag{16}$$

where

$$m_1 = Z_{11a}p_2 - \omega Z_{11b}q_2 - r_1 p_2 + Z_{12a} \tag{17}$$

$$m_2 = Z_{11a}p_1 - \omega Z_{11b}q_1 - r_1 p_1 + \omega Z_{12b} \tag{18}$$

$$s_1 = Z_{22a} - r_2 + Z_{12a}p_2 - \omega Z_{12b}q_2 \tag{19}$$

$$s_2 = -\omega Z_{22b} + Z_{12a}p_1 - \omega Z_{12b}q_1 \tag{20}$$

and

$$p_1 = \frac{(b_3)^2 - b_1 b_5}{a_1 b_3 - a_2 b_1} \tag{21}$$

$$p_2 = \frac{a_3 b_1 - a_2 b_3}{a_1 b_3 - a_2 b_1} \tag{22}$$

$$q_1 = \frac{a_2 b_3 - a_1 b_5}{a_1 b_3 - a_2 b_1} \tag{23}$$

$$q_2 = \frac{a_1 a_3 - (a_2)^2}{a_1 b_3 - a_2 b_1} \tag{24}$$

Appendix 4
========

# Line termination

The line is usually terminated by a resistance R in series with a capacitor C, which is paralleled by the loop resistance and capacitors. To determine the termination is to identify all these parameters. In Appendix 1 and 2 we have got the equivalent impedance Z or admittance of the termination Y at two frequencies when we identify the model parameters. We now considering using admittance representation. From Figure 9, we have

$$Y = g + j\omega c_1 + \frac{j\omega c_2}{1 + j\omega Rc_2} \tag{1}$$

Let

$$Y = a + jb \tag{2}$$

where a and b are the real and imaginary part of Y respectively. So

$$a = g + \frac{\omega^2 Rc_2^2}{1 + \omega^2 R^2 c_2^2} \tag{3}$$

$$b = \omega c_1 + \frac{\omega c_2}{1 + \omega^2 R^2 c_2^2} \tag{4}$$

Let

$$Rc_2 = x \tag{5}$$

and measure the Y at two frequencies $\omega_1$ and $\omega_1$. we have

$$a_1 - a_2 = \frac{\omega_1^2 x c_2}{1 + \omega_1^2 x^2} - \frac{\omega_{21}^2 x c_2}{1 + \omega_2^2 x^2} \tag{6}$$

and

$$\frac{b_1}{\omega_1} - \frac{b_2}{\omega_2} = \frac{c_2}{1 + \omega_1^2 x^2} - \frac{c_2}{1 + \omega_2^2 x^2} \tag{7}$$

(6)/(7) we have

$$\frac{a_1 - a_2}{\dfrac{b_1}{\omega_1} - \dfrac{b_2}{\omega_2}} = \frac{\dfrac{\omega_1^2 x}{1+\omega_1^2 x^2} - \dfrac{\omega_2^2 x}{1+\omega_2^2 x^2}}{\dfrac{1}{1+\omega_1^2 x^2} - \dfrac{1}{1+\omega_2^2 x^2}}$$

$$= x\frac{\omega_1^2\left(1+\omega_2^2 x^2\right) - \omega_2^2\left(1+\omega_1^2 x^2\right)}{\left(1+\omega_2^2 x^2\right) - \left(1+\omega_1^2 x^2\right)} \tag{8}$$

$$= x\frac{\omega_1^2 - \omega_2^2}{\omega_2^2 x^2 - \omega_1^2 x^2}$$

$$= -\frac{1}{x}$$

i.e.

$$x = -\frac{\dfrac{b_1}{\omega_1} - \dfrac{b_2}{\omega_2}}{a_1 - a_2} = \frac{1}{\omega_1 \omega_2}\frac{\omega_2 b_1 - \omega_1 b_2}{a_2 - a_1} \tag{9}$$

After we get x, $c_2$ can be calculated from (6), which gives

$$c_2 = \frac{\left(a_1 - a_2\right)\left(1+\omega_1^2 x^2\right)\left(1+\omega_2^2 x^2\right)}{x\left(\omega_1^2 - \omega_2^2\right)} \tag{10}$$

and R from (5)

$$R = \frac{x}{c_2} \tag{11}$$

So g and c1 can be determined from (3) and (4) respectively

$$g = a_1 - \frac{\omega_1^2 x c_2^2}{1+\omega_1^2 x^2} \tag{12}$$

and

$$c_1 = \frac{b_1}{\omega_1} - \frac{c_2}{1+\omega_1^2 x^2} \tag{13}$$

## Claims

1. A method of testing a telecommunications system, the method comprising;

   1) applying a first AC test signal having a first signal frequency to the system and measuring the response of the system to the first test signal;

2) applying a second AC test signal having a second signal frequency different to the first signal frequency to the system and measuring the response of the system to the second test signal; and

3) calculating one or more parameters of the system from the responses measured in steps 1) and 2).

2. A method according to claim 1 wherein the first and second test signals are applied at different times.

3. A method according to claim one or two wherein one or both of the test signals has a substantially sinusoidal waveform.

4. A method according to any of the preceding claims wherein less than five cycles of each signal is applied to the system.

5. A method according to any of the preceding claims wherein the test signals are each applied to the system through a known impedance.

6. A method according to any of the preceding claims further comprising applying;

4) applying one or more additional test signals to the system and measuring the response of the system to the or each test signal; and
wherein step 3) comprises calculating one or more parameters of the system from the responses measured in steps 1),2) and 4).

7. A method according to any of the preceding claims wherein the system comprises first and second transmission lines, and wherein each step of applying a test signal and measuring the response of the system comprises

a) applying the test signal to the first line and monitoring the response of the first line and the second line to the test signal; and
b) applying the test signal to the second line and monitoring the response of the second line and the first line to the second test signal.

8. A method of testing a telecommunications system comprising first and second transmission lines, the method comprising

1) applying a first test signal to the first line and measuring the response of the first line and the second line to the first test signal;
2) applying a second test signal to the second line and measuring the response of the second line and the first line to the second test signal; and
3) calculating one or more parameters of the telecommunications system from the responses measured in steps 1) and 2).

9. A method according to any claim 8 wherein the first and second signals each comprise AC signals.

10. A method according to claim 9 wherein the signal frequencies of the first and second test signals are substantially identical.

11. A method according to claim 10 wherein the first and second test signals have a known phase relationship.

12. Apparatus for testing a telecommunications system, the apparatus comprising;

1) means for applying a first AC test signal having a first signal frequency to the system;
2) means for measuring the response of the system to the first test signal;
3) means for applying a second AC test signal having a second signal frequency different to the first signal frequency to the system;
4) means for measuring the response of the system to the second test signal; and
5) means for calculating one or more parameters of the system from the responses measured in steps 1) and 2).

**13.** Apparatus for testing a telecommunications system comprising first and second transmission lines, the apparatus comprising

1) means for applying a first test signal to the first line
2) means for measuring the response of the first line and the second line to the first test signal;
3) means for applying a second test signal to the second line
4) means for measuring the response of the second line and the first line to the second test signal; and
5) means for calculating one or more parameters of the telecommunications system from the responses measured in steps 1) and 2).

EP 0 961 467 A1

Fig. 1

Fig. 2

Fig. 3

Fig. 4

DFT DFT

A

B

↓
Close line
A switch

↓
Measure
DC line
voltage

↓
Open line A
switch and close
line B switch

Fig.5

Fig.6

$\vec{V}_{B2}$

$\vec{V}_{B1}$

$\vec{V}_{A1}$

$\vec{V}_{A2}$

$\vec{V}$

Fig. 7

Fig. 8

g

R

C₁

C₂

Fig. 9

R₅

C₃

A

B

C₂

R₆

R₃

C₁

C₄

R₄

Fig. 10

**European Patent Office**

## EUROPEAN SEARCH REPORT

Application Number

EP 98 30 4171

### DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| X | GB 2 173 974 A (STC PLC) 22 October 1986<br>* the whole document * | 1-3,12, 13 | H04M3/30 |
| X | EP 0 038 400 A (PHILIPS KOMMUNIKATIONS IND AG) 28 October 1981<br>* the whole document * | 1,3,5, 12,13 | |
| X | US 5 402 073 A (ROSS ALAN) 28 March 1995<br>* the whole document * | 1,3 | |
| A | US 5 625 667 A (VOGT III JOHN V ET AL) 29 April 1997<br>* the whole document * | 1,8,12, 13 | |
| A | US 4 825 458 A (DASH GLEN) 25 April 1989<br>* the whole document * | 1,12,13 | |
| A | US 4 186 282 A (ELLSON JOHN C) 29 January 1980<br>* the whole document * | 1,12,13 | |
| A | US 4 459 437 A (GABRY ANDRE C ET AL) 10 July 1984<br>* the whole document * | 1,12,13 | TECHNICAL FIELDS SEARCHED (Int.Cl.6)<br>H04M |
| A | US 5 073 920 A (MASUKAWA HIROHUMI ET AL) 17 December 1991<br>* the whole document * | 1,12,13 | |
| A | US 4 528 427 A (GADONNA MICHEL P ET AL) 9 July 1985<br>* the whole document * | 1,12,13 | |
| X | EP 0 285 320 A (AMERICAN TELEPHONE & TELEGRAPH) 5 October 1988<br>* page 4, line 21 - line 49 * | 8 | |

-/--

The present search report has been drawn up for all claims

| Place of search | Date of completion of the search | Examiner |
|---|---|---|
| THE HAGUE | 8 February 1999 | Kelperis, K |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03 82 (P04C01)

European Patent
Office

**EUROPEAN SEARCH REPORT**

Application Number

EP 98 30 4171

## DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| A | EP 0 200 038 A (SIEMENS AG) 5 November 1986 * page 4, line 20 - page 5, line 12 * | 8 | |
| A | DE 28 19 776 A (TERADYNE INC) 15 November 1979 * page 12, line 7 - page 13, line 32 * | 8 | |
| A | EP 0 453 825 A (SIEMENS AG) 30 October 1991 * the whole document * | 8 | |
| A | EP 0 762 713 A (SIEMENS AG) 12 March 1997 * the whole document * | 8 | |

TECHNICAL FIELDS
SEARCHED        (Int.Cl.6)

The present search report has been drawn up for all claims

| Place of search | Date of completion of the search | Examiner |
|---|---|---|
| THE HAGUE | 8 February 1999 | Kelperis, K |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

European Patent
Office

## CLAIMS INCURRING FEES

The present European patent application comprised at the time of filing more than ten claims.

☐ Only part of the claims have been paid within the prescribed time limit. The present European search report has been drawn up for the first ten claims and for those claims for which claims fees have been paid, namely claim(s):

☐ No claims fees have been paid within the prescribed time limit. The present European search report has been drawn up for the first ten claims.

## LACK OF UNITY OF INVENTION

The Search Division considers that the present European patent application does not comply with the requirements of unity of invention and relates to several inventions or groups of inventions, namely:

see sheet B

☒ All further search fees have been paid within the fixed time limit. The present European search report has been drawn up for all claims.

☐ Only part of the further search fees have been paid within the fixed time limit. The present European search report has been drawn up for those parts of the European patent application which relate to the inventions in respect of which search fees have been paid, namely claims:

☐ None of the further search fees have been paid within the fixed time limit. The present European search report has been drawn up for those parts of the European patent application which relate to the invention first mentioned in the claims, namely claims:

| | | |
|---|---|---|
| **European Patent**<br>**Office** | **LACK OF UNITY OF INVENTION**<br>**SHEET B** | **Application Number**<br>EP 98 30 4171 |

The Search Division considers that the present European patent application does not comply with the requirements of unity of invention and relates to several inventions or groups of inventions, namely:

1. Claims: 1-7 12-13

    Method for testing a telecommunications system by applying two test signals having different frequencies

2. Claims: 8-11

    Method for testing a telecommunications system by applying test signals to the first and second transmission lines

## ANNEX TO THE EUROPEAN SEARCH REPORT
## ON EUROPEAN PATENT APPLICATION NO.

EP 98 30 4171

This annex lists the patent family members relating to the patent documents cited in the above-mentioned European search report.
The members are as contained in the European Patent Office EDP file on
The European Patent Office is in no way liable for these particulars which are merely given for the purpose of information.

08-02-1999

| Patent document cited in search report | | Publication date | Patent family member(s) | | Publication date |
|---|---|---|---|---|---|
| GB 2173974 | A | 22-10-1986 | NONE | | |
| EP 0038400 | A | 28-10-1981 | DE | 3015517 A | 05-11-1981 |
| US 5402073 | A | 28-03-1995 | US | 5243295 A | 07-09-1993 |
| | | | AU | 3946193 A | 01-09-1993 |
| | | | BR | 9305806 A | 18-02-1997 |
| | | | CN | 1076067 A | 08-09-1993 |
| | | | EP | 0624292 A | 17-11-1994 |
| | | | JP | 7504302 T | 11-05-1995 |
| | | | WO | 9315564 A | 05-08-1993 |
| US 5625667 | A | 29-04-1997 | US | 5444759 A | 22-08-1995 |
| | | | CA | 2164620 A | 30-03-1995 |
| | | | WO | 9508893 A | 30-03-1995 |
| | | | EP | 0721722 A | 17-07-1996 |
| | | | JP | 9506215 T | 17-06-1997 |
| US 4825458 | A | 25-04-1989 | JP | 1093242 A | 12-04-1989 |
| US 4186282 | A | 29-01-1980 | NONE | | |
| US 4459437 | A | 10-07-1984 | FR | 2498334 A | 23-07-1982 |
| | | | CA | 1180387 A | 01-01-1985 |
| | | | EP | 0056545 A | 28-07-1982 |
| | | | JP | 57146170 A | 09-09-1982 |
| US 5073920 | A | 17-12-1991 | JP | 2829063 B | 25-11-1998 |
| | | | JP | 3163369 A | 15-07-1991 |
| US 4528427 | A | 09-07-1985 | FR | 2511511 A | 18-02-1983 |
| | | | CA | 1191553 A | 06-08-1985 |
| | | | EP | 0072721 A | 23-02-1983 |
| | | | JP | 1733738 C | 17-02-1993 |
| | | | JP | 4024895 B | 28-04-1992 |
| | | | JP | 58082170 A | 17-05-1983 |
| EP 0285320 | A | 05-10-1988 | US | 4797622 A | 10-01-1989 |
| | | | CA | 1286363 A | 16-07-1991 |
| | | | DE | 3885782 D | 05-01-1994 |
| | | | DE | 3885782 T | 01-06-1994 |
| | | | JP | 2003221 C | 20-12-1995 |
| | | | JP | 7018901 B | 06-03-1995 |
| | | | JP | 63261177 A | 27-10-1988 |
| EP 0200038 | A | 05-11-1986 | BR | 8601911 A | 30-12-1986 |

EPO FORM P0459

For more details about this annex : see Official Journal of the European Patent Office, No. 12/82

**ANNEX TO THE EUROPEAN SEARCH REPORT
ON EUROPEAN PATENT APPLICATION NO.**

EP 98 30 4171

This annex lists the patent family members relating to the patent documents cited in the above-mentioned European search report.
The members are as contained in the European Patent Office EDP file on
The European Patent Office is in no way liable for these particulars which are merely given for the purpose of information.

08-02-1999

| Patent document cited in search report | | Publication date | Patent family member(s) | | Publication date |
|---|---|---|---|---|---|
| EP 0200038 | A | | DE | 3686084 A | 27-08-1992 |
| | | | DK | 195386 A | 31-10-1986 |
| | | | FI | 861409 A,B | 31-10-1986 |
| | | | PT | 82466 B | 31-07-1992 |
| | | | US | 4691337 A | 01-09-1987 |
| DE 2819776 | A | 15-11-1979 | NONE | | |
| EP 0453825 | A | 30-10-1991 | NONE | | |
| EP 0762713 | A | 12-03-1997 | NONE | | |

EPO FORM P0459

For more details about this annex : see Official Journal of the European Patent Office, No. 12/82